Europäisches Patentamt

European Patent Office

Office européen des brevets

(11) Publication number: **0 464 362 A1**

# EUROPEAN PATENT APPLICATION

(21) Application number: **91108549.6**

(22) Date of filing: **25.05.91**

(51) Int. Cl.⁵: **A23K 1/16**, //A61K31/70

(30) Priority: **27.06.90 FI 903246**

(43) Date of publication of application:
**08.01.92 Bulletin 92/02**

(84) Designated Contracting States:
**AT BE CH DE DK ES FR GB GR IT LI LU NL SE**

(71) Applicant: **VALIO MEIJERIEN KESKUSOSUUSLIIKE**
**Kalevankatu 56**
**SF-00180 Helsinki(FI)**

(72) Inventor: **Nousiainen, Juha**
**Tanhuankuja 2F 51**
**SF-00940 Helsinki(FI)**
Inventor: **Setälä, Jouko**
**Kalliotie 9C**
**SF-00760 Helsinki(FI)**

(74) Representative: **Tergau, Enno et al**
**Patentanwälte Tergau & Pohl Postfach 9347**
**Hefnersplatz 3**
**W-8500 Nürnberg 11(DE)**

(54) Feed for promoting the growth and intestinal function of animals.

(57) The invention relates to a feed promoting the growth and intestinal function of animals. The feed comprises a mixture of lactitol and lactulose together with a feed additive. The invention is also concerned with a composition to be mixed with the feed, its use, and a method of promoting the growth and intestinal function of animals by adding said composition to the feed.

EP 0 464 362 A1

Rank Xerox (UK) Business Services

This invention relates to a feed promoting the growth and intestinal function of animals, a composition to be mixed with the feed, the use of the composition in the feed promoting the growth and intestinal function of animals, and a method of promoting the growth and intestinal function of animals. The feed of the invention is suitable for young single-stomach domestic animals, and it can be used for efficient control of harmful fermentation processes taking place in the intestines, such as the formation of ammonia.

With young domestic animals, the bacterial balance in the intestines may be disturbed due to such factors as weaning, poor digestibility of nutrients or unsatisfactory hygienic conditions of the immediate surroundings. If the animal has a weak local immune response, this may result in the overgrowth of harmful bacteria particularly in the large intestine. The ammonia concentration and the pH of the contents of the intestine increase. The mucosa of the intestine gets irritated and the liver becomes overstrained. As a result, the growth and the feed intake decrease and diarrhea occurs. In particular, an increase in the formation of ammonia disturbs the development of the mucosa of the intestine (e.g., VISEK; J. Anim. Sci., 46:1447-1469 and J. Dairy Sci., 67:481-498). An essential part of the intestinal function is gas formation. Slight or reduced gas formation indicates good or improved function.

The above-described problems associated with the growth and intestinal function can be prevented and alleviated by adding chemical additives in animal feed in a manner known *per se*, such as quinoxaline derivatives, e.g. cyadox, carbadox or olaquindox, or probiotics, such as lactulose or lactitol. Lactulose (4-$\beta$-D-galactosyl-D-fructose) and lactitol (4-$\beta$-D-galactosyl-D-sorbitol) are synthetic derivatives of lactose and they are produced industrially by isomerizing or hydrating lactose, respectively. The lactulose molecule consists of galactose and fructose, and the lactitol molecule consists of galactose and sorbitol. Both lactose derivatives contain a specific $\beta$-galactoside bond.

Several researches have shown that the $\beta$-galactosidases of the small intestine of mammals degrade lactulose and lactitol to a very small extent. For this reason, they are not absorbed from the small intestine but are fermented by the versatile bacterial flora of the large intestine into organic acids and gases, thus reducing the pH and the ammonia concentration of the intestine. This fermentation also causes an adaptive change in the flora, since the $\beta$-galactosidases of the lactic acid bacteria and bifidobacteria degrade lactulose and lactitol clearly better than the corresponding enzymes of coliforms and clostridia, for instance. The enzymatic degradation of lactulose and lactitol is described, e.g., in the following articles: HARJU, M., Milchwissenschaft, 41:349-352, 43:76-78 and 43:148-152. The intestinal metabolism of lactulose and lactitol is described in the articles: EVERED and SADOOGH-ABASIAN, Br. J. Nutr., 47:47-51, 57:195-199, SAHOTA et al., J. Gen. Microbiol., 128:319-325 and FLORENT et al., J. Clin. Invest., 75:608-613.

On account of their properties, lactulose and lactitol have applications in drugs in the treatment of certain liver diseases and in sweeteners. This is reported, among others, by LANTHIER and MORGAN, Gut, 26:415-420 and PATIL et al, Br. J. Nutr., 57:195-199. Use in animal fodders as an additive is described in GB Patent Specification 1499717 and US Patent 4,147,773 (lactulose) and Finnish Patent Specification 73121 (lactitol).

Additives can be added in feed in a manner known *per se*. For example, olaquindox [2-(N-hydroxyethyl-carbamoyl-3-quinoxaline-1,4-dioxide)] or carbadox (methyl-3(2-quinoxalinylmethylen-carbatzate-N[1], N[4]-dioxide)] or their mixture is added to feed as a liquid or powder, usually at a concentration of about 50 to 100 ppm. Both olaquindox and carbadox have a favourable effect on the health of animals, especially pigs. The effects of olaquindox and carbadox are described, e.g., in the following articles: ANON, Mecadox (carbadox) vs. olaquindox, Technical information update, ref. No. 8307. Pfizer International Inc., New York; BRONSCH et al., Z. Tierphysiol., Tierernährg. u. Futtermittelkde., 36:211-221 and WENK et al., Arch. Anim. Nutr., 36:45-54. Attempts made to use compounds of this kind with lactose derivatives have not been successful (e.g., MANN et al., Am. J. Gastroent., 72:141-145).

It has now been unexpectedly found that a mixture of lactulose and lactitol can be used together with a feed additive. The prevention of fermentation processes in general and formation of ammonia is thereby considerably more effective than when using the additive alone. It is previously known that these substances reduce proteolysis in the intestines but the results show that it is clearly advantageous to combine them.

The feed of the invention is characterized in that it comprises a mixture of lactitol and lactulose together with a feed additive. The additive is e.g. a chemical additive such as a feed antibiotic, preferably a quinoxaline derivative, most advantageously olaquindox or carbadox. In addition, the feed preferably contains bacteria promoting intestinal function, particularly lactic acid bacteria. The ratio of the percentages by weight of the lactulose and lactitol contained in the feed is preferably between 30:70 and 70:30, most advantageously 50:50. The feed of the invention promotes and improves the intestinal function, prevents or cures diarrhea, and promotes the growth of the animal. The composition of the invention is characterized in that it comprises a mixture of lactitol and lactulose together with a feed additive. The invention is also concerned with the use of a mixture of lactitol and lactulose together with a feed additive in a feed promoting the growth and intestinal function of animals, and with a method of promoting the growth and intestinal function of animals and a method of treating intestinal malfunction in animals, in which methods a mixture of lactitol and lactulose is added to the feed together with a feed additive.

The following examples are illustrative of the invention.

Example 1

The contents of the caecum and the large intestine of a pig (diluted at a ratio 1:1 by a buffer) were incubated for 8 hours anaerobically at $+39°$ C. The method used in the test gives results comparable with results obtained with animals (NOUSIAINEN 1990, Licentiate dissertation, University of Helsinki, Department of Animal Husbandry). Lactose or a mixture of lactulose and lactitol and olaquindox or carbadox were added to the diluted intestinal contents. The mixture of lactulose and lactitol was compared with a normal disaccharide, lactose, in the presence or absence of carbadox or olaquindox. The amounts of ammonia and gas formed during fermentation were measured. The results are shown in Table 1.

Table 1

Fermentation changes caused by olaquindox and carbadox in the intestinal juice of the large intestine of a pig when they are used together with various carbohydrates

| Carbohydrate | Lactose[2] | | | LLO+LLI[3] | | |
|---|---|---|---|---|---|---|
| Additive | Contr. | Carb.[1] | Olaq.[1] | Contr. | Carb. | Olaq. |
| Production | | | | | | |
| NH$_3$, mmol/l | 22.1 | 13.9 | 14.6 | 16.4 | 8.1 | 10.4 |
| Gas, ml/l | 753 | 246 | 356 | 973 | 90 | 358 |

1) 50 ppm. 2) 200 mg/30 ml. 3) Altogether 200 mg/30 ml, the ratio of percentages by weight 50:50. (LLO = lactulose, LLI = lactitol).

The results show that when a mixture of lactulose and lactitol is used together with olaquindox or carbadox, there occurs a great reduction in the microbial activity and the production of both gas and ammonia in the intestinal juice. It can be seen that lactose did not have a similar effect in this respect.

Example 2

The contents of the caecum and the large intestine of a pig were treated similarly as in Example 1. Altogether 30 MENKE tubes were incubated. A mixture of lactulose and lactitol was added to the intestinal contents after dilution in a total amount of 200 mg/30 ml, and olaquindox or carbadox was added 50 ppm. The lactulose-lactitol mixture was compared with a normal disaccharide, lactose (control). The amounts of organic acids, ammonia and gas produced during fermentation were measured. The results are shown in Table 2.

Table 2.

Fermentation changes caused by olaquindox and carbadox in the intestinal juice of the large intestine of a pig when they are used together with lactose or a mixture of lactulose and lactitol.

| Substrate | Control | Lactulose-lactitol mixture |
|---|---|---|
| Test 1, olaquindox, 30:70* | | |
| Ammonia | -4.6 | -31.5 |
| VFA | -24.5 | -87.0 |
| Gas | -7.6 | -60.3 |
| Test 2, olaquindox, 70:30* | | |
| Ammonia | -12.3 | -26.6 |
| Test 3, carbadox, 50:50* | | |
| Ammonia | -7.7 | -35.2 |
| VFA | -82.3 | -96.6 |
| Gas | -56.9 | -98.0 |

* = ratio of percentages by weight. The numbers are percentages obtained from changes in the fermentation parameters obtained merely by olaquindox or carbadox.

The negative sign (-) indicates loss during incubation. VFA = volatile fatty acids.

It appears from the results shown in Table 2 that when used together with olaquindox or carbadox, the mixture of lactulose and lactitol reduces greatly the microbial activity (VFA production) and the formation of gas and ammonia in the intestinal juice. It can be seen that lactose does not have a similar effect in this respect.

## Claims

1. Feed promoting the growth and intestinal function of animals, **characterized** in that it comprises a mixture of lactitol and lactulose together with a feed additive.

2. Feed according to claim 1, **characterized** in that the feed additive is a quinoxaline derivative.

3. Feed according to claim 2, **characterized** in that the additive is olaquindox [2-(N-hydroxyethyl-carbamoyl-3-quinoxaline-1,4-dioxide)] or carbadox (methyl-3(2-quinoxalinylmethylen-carbatzate-$N^1$, $N^4$-dioxide)].

4. Feed according to any of the claims 1 to 3, **characterized** in that it contains bacteria promoting intestinal function, such as lactic acid bacteria.

5. Feed according to claim 1, **characterized** in that the ratio of the percentages by weight of lactulose and lactitol is between 30:70 and 70:30, preferably 50:50.

6. Composition to be mixed with feed, **characterized** in that it comprises a mixture of lactitol and lactulose together with a feed additive.

7. Use of a mixture of lactitol and lactulose together with a feed additive in a feed promoting the growth and intestinal function of animals.

**8.** Method of promoting the growth and intestinal function of animals, **characterized** by adding a mixture of lactitol and lactulose together with a feed additive in a feed to be given to the animals.

**9.** Method of treating intestinal malfunction of animals, **characterized** by adding a mixture of lactitol and lactulose together with a feed additive in a feed to be given to the animals.

European Patent Office

**PARTIAL EUROPEAN SEARCH REPORT**
which under Rule 45 of the European Patent Convention
shall be considered, for the purposes of subsequent
proceedings, as the European search report

Application number

EP 91 10 8549

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 218 324 (VALIO MEIJERIEN KESKUSOSUUSLIIKE)<br><br>* Claims 1,7-9; page 3, line 23 - page 7, line 15 * | 1,6-8 | A 23 K 1/16 //<br>A 61 K 31/70 |
| A | * Claim 3; page 3, lines 19-22 * | 4 | |
| D | & FI-A-73 121 | | |
| | -- | | |
| Y | PATENT ABSTRACTS OF JAPAN, vol. 14, no. 149, (C-705)(4092), 22nd March 1990;<br>& JP-A-2 19 329 (MORINAGA MILK IND. CO. LTD) 23-01-1990<br><br>* Abstract * | 1,6-8 | |
| | -- | | TECHNICAL FIELDS SEARCHED (Int. Cl.4) |
| | ./. | | A 23 K<br>A 61 K |

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-8

Claims searched incompletely:

Claims not searched: 9

Reason for the limitation of the search:

Method for treatment of the human or animal body by surgery or therapy (see Art. 52(4) of the European Patent Convention).

| Place of search | Date of completion of the search | Examiner |
|---|---|---|
| THE HAGUE | 18-07-1991 | DEKEIREL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1505.1 03.82

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 12, no. 312, (C-523)(3159), 24th August 1988; & JP-A-63 84 452 (NIPPON SOUSAN KOGYO K.K.) 15-04-1988 <br><br> * Abstract * | 1,6-8 | |
| A | EP-A-0 303 946 (MUNK, WERNER GEORG) <br><br> * Claims 1,4,15 * | 1,4, 6-8 | |
| D,A | GB-A-1 499 717 (MORINAGA MILK INDUSTRY CO. LTD) <br><br> * Claim 1; page 11, line 48 - page 16, line 18 * | 1,6-8 | TECHNICAL FIELDS SEARCHED (Int Cl.4) |
| A | JOURNAL OF THE SCIENCE OF FOOD AND AGRICULTURE, vol. 51, no. 2, 1990, pages 233-246, Society of Chemical Industry, Shinfield, GB; S.P. BIRD et al.: "Energy values of lactitol and lactulose as determined with miniature pigs and growing rats" <br><br> * The whole article * | 1,6-8 | |
| A | BE-A- 888 084 (JAN DENECKER et al.) <br><br> * Claims 1,4 * | 1 | |
| A | EP-A-0 207 344 (BAYER) <br><br> * Claims 1,5 * | 2,3 | |
| D,A | US-A-4 147 773 (KATSUHIRO OGASA) | | |